# EUROPEAN PATENT APPLICATION

(11) **EP 4 497 502 A1**
(43) Date of publication of application: **29.01.2025**
(21) Application number: 23774865.2
(22) Date of filing: 20.03.2023
(51) Int. Cl.: B01J 29/76, B01D 53/94, F01N 3/10

(54) **EXHAUST GAS PURIFICATION CATALYST**

(30) Priority: 22.03.2022 JP 2022046027
(71) Applicant: Mitsui Mining & Smelting Co., Ltd., Shinagawa-ku Tokyo 141-8584 (JP)
(72) Inventor: ASAKOSHI Toshiki, Ageo-shi, Saitama 362-0025 (JP); WATANABE Tokuya, Ageo-shi, Saitama 362-0025 (JP); IWAKURA Hironori, Ageo-shi, Saitama 362-0025 (JP)
(74) Representative: Novagraaf Technologies
(86) International application number: PCT/JP2023/010881
(87) International publication number: WO 2023/182270

(57) **Abstract**

The present invention aims at providing an exhaust gas purification catalyst that uses a Cu-supporting zeolite and exerts excellent hydrocarbon adsorption performance even after a thermal load is applied, and provides an exhaust gas purification catalyst (1A), including a substrate (10) and a catalyst layer (20A) provided on the substrate (10), wherein the catalyst layer (20A) includes: a first layer (21) containing a Cu-supporting zeolite and a Zr-based oxide; and a second layer (22) containing a platinum group element, wherein a content of Zr in terms of ZrO₂ in the first layer (21) is 10% by mass or more, based on a mass of the first layer (21), and wherein a content of Ce in terms of CeO₂ in the first layer (21) is 3% by mass or less, based on the mass of the first layer (21).

## Description

### FIELD OF THE INVENTION

The present invention relates to an exhaust gas purification catalyst.

### BACKGROUND ART

Exhaust gas emitted from an internal combustion engine of an automobile, a motorcycle or the like contains harmful components such as hydrocarbons (HC), carbon monoxide (CO) and nitrogen oxide (NOx). As an exhaust gas purification catalyst that purifies and detoxifies these harmful components, a three-way catalyst, which has a catalytic activity to oxidize HC and convert it to water and carbon dioxide, to oxidize CO and convert it to carbon dioxide as well as to reduce NOx and convert it to nitrogen, is used. As a component of the three-way catalyst, a platinum group element such as Pt, Pd or Rh is used.

The hydrocarbon purification performance of the exhaust gas purification catalyst is easily affected by the temperature of the exhaust gas. In order for the exhaust gas purification catalyst to efficiently exert the hydrocarbon purification performance, the temperature is generally required to be 300°C or more. On the other hand, the exhaust gas emitted from the internal combustion engine immediately after starting has a temperature of less than 300°C, and may contain a large amount of hydrocarbon. Therefore, the exhaust gas purification catalyst may be incapable of sufficiently exerting the hydrocarbon purification performance on the exhaust gas of the internal combustion engine immediately after starting. Thus, a Cu-supporting zeolite is optionally used for the purpose of adsorbing hydrocarbon contained in the exhaust gas of the internal combustion engine immediately after starting and complementing the hydrocarbon purification performance of the exhaust gas purification catalyst.

For example, Patent Document 1 discloses a catalytically active coating containing: 50 to 60% by mass of a copper-containing zeolite; 25 to 30% by mass of a cerium-zirconium mixed oxide and/or a cerium oxide; 8 to 10% by mass of an aluminum oxide optionally stabilized with a rare earth sesquioxide; and the balance being an inorganic binder.

### CITATION LIST

### PATENT DOCUMENT

Patent Document 1: JP 2011-121055 A

### SUMMARY OF THE INVENTION

### TECHNICAL PROBLEM

However, a conventional exhaust gas purification catalyst that uses a Cu-supporting zeolite poses a problem of insufficient hydrocarbon adsorption performance after a thermal load is applied.

Accordingly, an object of the present invention is to provide an exhaust gas purification catalyst that uses a Cu-supporting zeolite and exerts excellent hydrocarbon adsorption performance even after a thermal load is applied.

### SOLUTION TO PROBLEM

To solve the above-mentioned problem, the present invention provides the following exhaust gas purification catalysts.
[1] An exhaust gas purification catalyst, including a substrate and a catalyst layer provided on the substrate,
   wherein the catalyst layer includes: a first layer containing a Cu-supporting zeolite and a Zr-based oxide; and a second layer containing a platinum group element,
   wherein a content of Zr in terms of ZrO₂ in the first layer is 10% by mass or more, based on a mass of the first layer, and
   wherein a content of Ce in terms of CeO₂ in the first layer is 3% by mass or less, based on the mass of the first layer.
[2] The exhaust gas purification catalyst according to [1], wherein the content of Zr in terms of ZrO₂ in the first layer is 50% by mass or less, based on the mass of the first layer.
[3] The exhaust gas purification catalyst according to [1] or [2], wherein a content of Zr in terms of ZrO₂ in the Zr-based oxide is 45% by mass or more, based on a mass of the Zr-based oxide.
[4] The exhaust gas purification catalyst according to any one of [1] to [3], wherein a content of Ce in terms of CeO₂ in the Zr-based oxide is 10% by mass or less, based on a mass of the Zr-based oxide.
[5] The exhaust gas purification catalyst according to any one of [1] to [4], wherein the Zr-based oxide has an average particle size of 1 µm or more and 10 µm or less.
[6] The exhaust gas purification catalyst according to any one of [1] to [5], wherein an atom ratio of a content of Ce to a content of Cu in the first layer is 0 or more and less than 2.
[7] The exhaust gas purification catalyst according to any one of [1] to [6], wherein a mass ratio of a content of the Cu-supporting zeolite to a content of the Zr-based oxide in the first layer is 1.5 or more and 3.5 or less.
[8] The exhaust gas purification catalyst according to any one of [1] to [7], wherein a content of the Cu-supporting zeolite in the first layer is 50% by mass or more and 90% by mass or less, based on the mass of the first layer.

### ADVANTAGEOUS EFFECTS OF INVENTION

According to the present invention, there is provided an exhaust gas purification catalyst that uses a Cu-supporting zeolite and exerts excellent hydrocarbon adsorption performance even after a thermal load is applied.

### BRIEF DESCRIPTION OF THE DRAWINGS

Figure 1 is a partial end view showing a state in which an exhaust gas purification catalyst according to a first embodiment of the present invention is disposed in an exhaust gas path of an internal combustion engine.
Figure 2 is an end view taken along line A-A of Figure 1.
Figure 3 is an enlarged view of a region denoted by the reference sign R in Figure 2.
Figure 4 is an end view taken along line B-B of Figure 1.
Figure 5 is an end view (corresponding to the end view of Figure 4) of an exhaust gas purification catalyst according to a second embodiment of the present invention.
Figure 6 is an end view (corresponding to the end view of Figure 4) of an exhaust gas purification catalyst according to a third embodiment of the present invention.
Figure 7 is an end view (corresponding to the end view of Figure 4) of an exhaust gas purification catalyst according to a fourth embodiment of the present invention.

### DETAILED DESCRIPTION OF THE INVENTION

An exhaust gas purification catalyst according to the present invention will be described below. Two or more of the features of the exhaust gas purification catalyst described in the present specification can be combined. The prevent invention encompasses the combination of the two or more features.

### <<First embodiment>>

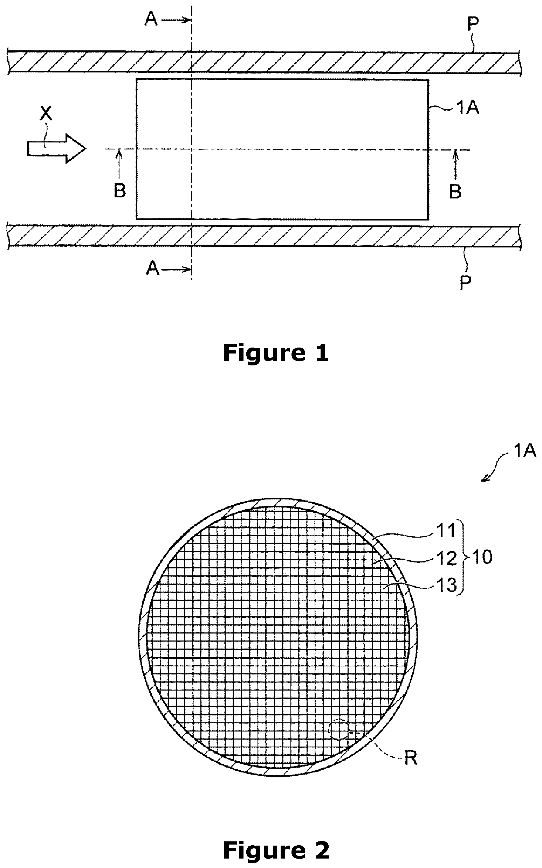

With reference to Figures 1 to 4, an exhaust gas purification catalyst 1A according to a first embodiment of the present invention will be described below.

As shown in Figure 1, the exhaust gas purification catalyst 1A is disposed in an exhaust gas path in an exhaust pipe P of an internal combustion engine. The internal combustion engine is, for example, a gasoline engine, a diesel engine or the like. Exhaust gas emitted from the internal combustion engine flows through the exhaust gas path in the exhaust pipe P from one end to the other end of the exhaust pipe P, and is purified by the exhaust gas purification catalyst 1A provided in the exhaust pipe P. In the drawings, the exhaust gas flow direction is denoted by the reference sign X. The upstream position in the exhaust gas flow direction X may be referred to as the "exhaust gas inflow side" or "upstream side", and the downstream position in the exhaust gas flow direction X may be referred to as the "exhaust gas outflow side" or "downstream side".

Together with the exhaust gas purification catalyst 1A, another exhaust gas purification catalyst may be disposed in the exhaust gas path in the exhaust pipe P. For example, the other exhaust gas purification catalyst may be disposed on the upstream or downstream side of the exhaust gas purification catalyst 1A. A known exhaust gas purification catalyst can be used as the other exhaust gas purification catalyst.

As shown in Figures 2 to 4, the exhaust gas purification catalyst 1A includes a substrate 10 and a catalyst layer 20A provided on the substrate 10.

The substrate 10 can be made of any material selected as appropriate from materials commonly used for substrates of exhaust gas purification catalysts. The material for forming the substrate 10 is preferably a material that allows the substrate 10 to stably maintain its shape even when the substrate 10 is exposed to an exhaust gas at 400°C or more. Examples of the material for the substrate 10 include ceramics such as cordierite, silicon carbide and aluminum titanate, alloys such as stainless steel, and the like.

The substrate 10 has, for example, a honeycomb structure.

As shown in Figures 2 to 4, the substrate 10 includes: a tubular member 11 that defines the external shape of the substrate 10; a partition wall 12 provided in the tubular member 11; and cells 13 separated from one another by the partition wall 12.

As shown in Figure 2, the tubular member 11 has, for example, a hollow cylindrical shape, but may have another shape such as a hollow elliptic cylindrical shape and a polygonal tubular shape.

As shown in Figures 2 to 4, the partition wall 12 is present between adjacent cells 13, whereby the adjacent cells 13 are separated from each other by the partition wall 12. The partition wall 12 is preferably porous. The thickness of the partition wall 12 is, for example, 20 µm or more and 1500 µm or less.

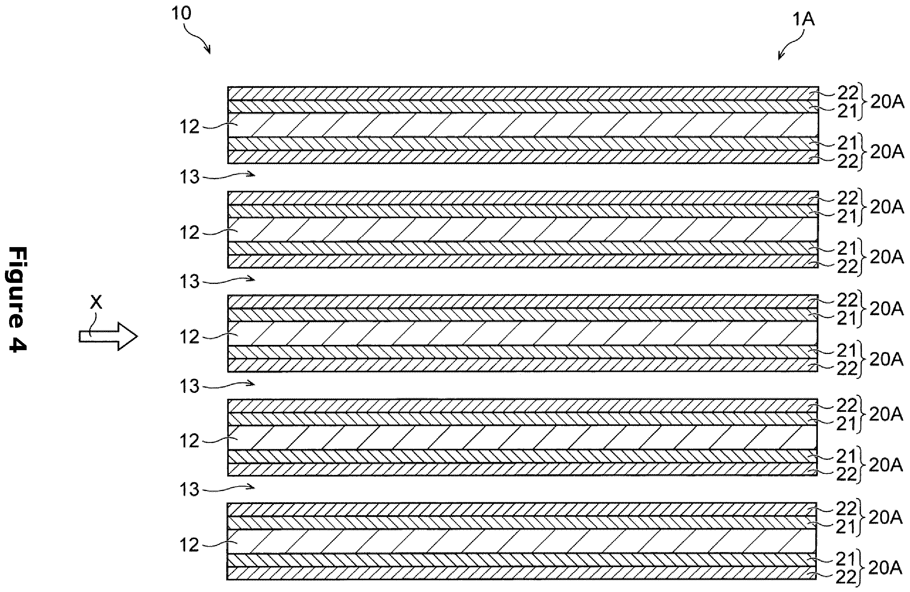

As shown in Figure 4, each cell 13 extends in the exhaust gas flow direction X and has an end on the exhaust gas inflow side and an end on the exhaust gas outflow side.

As shown in Figure 4, the end on the exhaust gas inflow side and the end of the exhaust gas outflow side of each cell 13 are both open. Therefore, the exhaust gas that has flowed in from the end (opening) on the exhaust gas inflow side of each cell 13 flows out from the end (opening) on the exhaust gas outflow side of each cell 13. Such a mode is called a flow-through type.

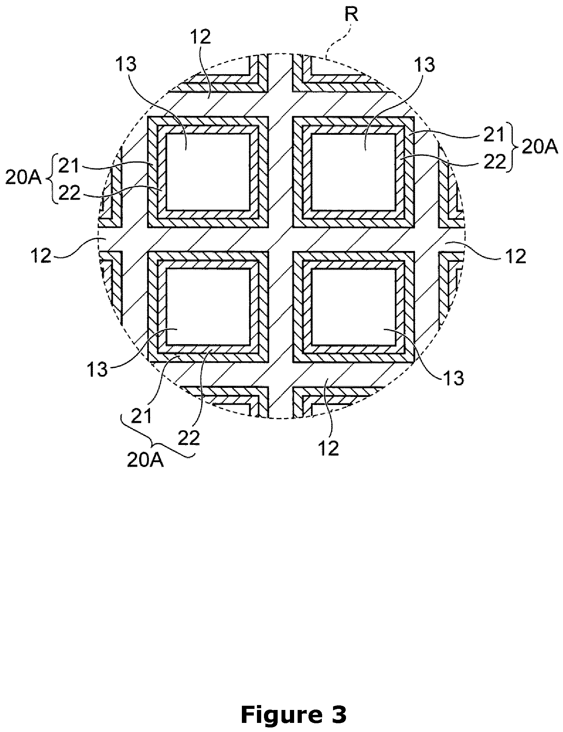

As shown in Figures 2 and 3, the shape in a plan view of the end (opening) on the exhaust gas inflow side of each cell 13 is rectangle, but may be another shape such as hexagon and octagon. The same applies to the shape in a plan view of the end (opening) on the exhaust gas outflow side of each cell 13.

The cell density per square inch of the substrate 10 is, for example, 200 cells or more and 1000 cells or less. The cell density per square inch of the substrate 10 means the total number of the cells 13 per square inch in a cross-section obtained by cutting the substrate 10 by a plane perpendicular to the exhaust gas flow direction X.

The volume of the substrate 10 is, for example, 0.1 L or more and 20 L or less. The volume of the substrate 10 means an apparent volume of the substrate 10. In a case where the substrate 10 is in the form of a cylinder, the outer diameter of the substrate 10 is 2r and the length of the substrate 10 is L, the volume of the substrate 10 is represented by the formula: Volume of substrate 10 = π × r² × L.

As shown in Figure 4, the catalyst layer 20A is provided on a surface of the partition wall 12 of the substrate 10, the surface extending in the exhaust gas flow direction X. The surface of the partition wall 12 means an outer surface of the partition wall 12, the outer surface defining the external shape of the partition wall 12. The catalyst layer 20A may be provided directly on the surface of the partition wall 12 or may be provided on the surface of the partition wall 12 via another layer. In the present embodiment, the catalyst layer 20A is provided directly on the surface of the partition wall 12.

As shown in Figure 4, the catalyst layers 20A may be composed of a structure rising from the surface of the partition wall 12 toward the cell 13 side (hereinafter referred to as the "rising structure"), or may be composed of a structure present inside the partition wall 12 (hereinafter referred to as the "internal structure"), or may have both the rising structure and the internal structure. The expression "the catalyst layer 20A provided on the substrate 10" encompasses an embodiment wherein the catalyst layer 20A is composed of the rising structure, an embodiment wherein the catalyst layer 20A is composed of the internal structure, and an embodiment wherein the catalyst layer 20A has both the rising structure and the internal structure.

As shown in Figure 4, the catalyst layer 20A extends from the end on the exhaust gas inflow side of the partition wall 12 to the end on the exhaust gas outflow side of the partition wall 12 along the exhaust gas flow direction X. The catalyst layer 20A may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end of the exhaust gas inflow side of the partition wall 12.

From the viewpoint of balancing the temperature rise and the purification performance of the catalyst layer 20A, the mass (mass after drying and calcining) of the catalyst layer 20A per unit volume of the portion of the substrate 10 provided with the catalyst layer 20A is preferably 50 g/L or more and 330 g/L or less, more preferably 70 g/L or more and 310 g/L or less, and still more preferably 90 g/L or more and 290 g/L or less. The mass of the catalyst layer 20A per unit volume of the portion of the substrate 10 provided with the catalyst layer 20A is calculated from the formula: (Mass of catalyst layer 20A) / ((Volume of substrate 10) X (Average length L20A of catalyst layer 20A / Length L10 of substrate 10)).

In the present specification, the term "length" means the dimension in the axial direction of the substrate 10, unless otherwise defined.

In the present specification, the expression "the mass of the catalyst layer 20A" means the total mass calculated by categorizing all metal elements contained in the catalyst layer 20A into a platinum group element(s) and a metal element(s) other than the platinum group element(s), obtaining the mass(es) of the platinum group element(s) in terms of metal and the mass(es) of the metal element(s) other than the platinum group element(s) in terms of oxide, and totalizing the obtained masses. In other words, the expression "the mass of the catalyst layer 20A" means the calculated mass obtained by totalizing the mass(es) of the platinum group element(s) contained in the catalyst layer 20A in terms of metal and the mass(es) of the metal element(s) other than the platinum group element(s) contained in the catalyst layer 20A in terms of oxide. The term "metal element" encompasses a metalloid element such as Si, B or the like.

In the present specification, the term "platinum group element" encompasses Pt (platinum element), Pd (palladium element), Rh (rhodium element), Ru (ruthenium element), Os (osmium element) and Ir (iridium element).

In the present specification, an oxide of a rare earth element except Ce, Pr and Tb means a sesquioxide (M₂O₃, wherein M represents a rare earth element except Ce, Pr and Tb), an oxide of Ce means CeO₂, an oxide of Pr means Pr₆O₁₁, an oxide of Tb means Tb₄O₇, an oxide of Al means Al₂O₃, an oxide of Zr means ZrO₂, an oxide of Hf means HfO₂, an oxide of Si means SiO₂, an oxide of Cu means CuO, an oxide of B means B₂O₃, an oxide of Cr means Cr₂O₃, an oxide of Mg means MgO, an oxide of Ca means CaO, an oxide of Sr means SrO, an oxide of Ba means BaO, an oxide of Fe means Fe₃O₄, an oxide of Mn means Mn₃O₄, an oxide of Ni means NiO, an oxide of Ti means TiO₂, an oxide of Zn means ZnO, an oxide of Sn means SnO₂, an oxide of Li means Li₂O, an oxide of Na means Na₂O, an oxide of K means K₂O, an oxide of Rb means Rb₂O, an oxide of Cs means Cs₂O, an oxide of Ag means Ag₂O, an oxide of V means V₂O₅, an oxide of Co means Co₃O₄, an oxide of Nb means Nb₂O₅, an oxide of Mo means MoO₃, an oxide of Ga means Ga₂O₃, an oxide of Ge means GeO₂, and an oxide of P means P₂O₅.

One example of the method of measuring the average length L20A of the catalyst layer 20A is as follows:

A sample extending in the axial direction of the substrate 10 and having the same length as the length L10 of the substrate 10 is cut out from the exhaust gas purification catalyst 1A. The sample is, for example, in the form of a cylinder having a diameter of 25.4 mm. The value of the diameter of the sample can be changed as necessary. The sample is cut at 5 mm intervals in planes perpendicular to the axial direction of the substrate 10 to obtain cut pieces, which are referred to as the first cut piece, the second cut piece and so on up to the n-th cut piece, sequentially from the side of the end on the exhaust gas inflow side of the sample. The length of each cut piece is 5 mm. The composition of each cut piece is analyzed using an X-ray fluorescence analyzer (XRF) (for example, an energy dispersive X-ray analyzer (EDX), a wavelength dispersive X-ray analyzer (WDX) or the like), an inductively coupled plasma emission spectrophotometer (ICP-AES), a scanning electron microscope-energy dispersive X-ray spectroscopy (SEM-EDX) or the like, and it is confirmed whether or not each cut piece includes part of the catalyst layer 20A, based on the composition of each cut piece.

The compositional analysis is not necessarily performed for a cut piece that apparently includes part of the catalyst layer 20A. For example, it is possible to confirm whether or not each cut piece includes part of the catalyst layer 20A, by observing the cross section thereof using a scanning electron microscope (SEM), an electron probe microanalyzer (EPMA) or the like. At the time of observing the cross section, element mapping of the cross section may be performed.

After confirming whether or not each cut piece includes part of the catalyst layer 20A, the length of the catalyst layer 20A included in the sample is calculated based on the following formula: Length of catalyst layer 20A included in sample = 5 mm × (Number of cut pieces each including part of catalyst layer 20A)

For example, in a case where each of the first cut piece to the k-th cut piece includes part of the catalyst layer 20A, whereas each of the (k + 1)-th to the n-th cut pieces does not include part of the catalyst layer 20A, the length of the catalyst layer 20A included in the sample is (5 × k) mm.

One example of more specifically measuring the length of the catalyst layer 20A included in the sample is as follows:
The k-th cut piece (namely, the cut piece closest to the exhaust gas outflow side, among the cut pieces each including part of the catalyst layer 20A) is cut in the axial direction of the substrate 10, and part of the catalyst layer 20A existing in the resulting cross section is observed using SEM, EPMA or the like, to measure the length of part of the catalyst layer 20A included in the k-th cut piece. Thereafter, the length of the catalyst layer 20A included in the sample is calculated based on the following formula: Length of catalyst layer 20A included in sample = (5 mm × (k-1)) + (Length of part of catalyst layer 20A included in k-th cut piece)

The length of the catalyst layer 20A included in the sample is calculated for 8 to 16 samples arbitrarily cut out from the exhaust gas purification catalyst 1A, and the mean value of the measured lengths is defined as the average length L20A of the catalyst layer 20A.

As shown in Figure 4, the catalyst layer 20A includes a first layer 21 and a second layer 22.

The first layer 21 contains a Cu-supporting zeolite as described later. Therefore, the first layer 21 functions as a hydrocarbon adsorber.

The first layer 21 adsorbs hydrocarbon included in the exhaust gas of the internal combustion engine immediately after starting and complements the hydrocarbon purification performance of the exhaust gas purification catalyst. Subsequently, the hydrocarbon adsorbed by the first layer 21 is released and purified by the second layer 22 (in the second and fourth embodiments described below, the second layer 22 and the third layer 23).

As shown in Figure 4, the second layer 22 is provided on the upside of the first layer 21. According to an embodiment wherein the second layer 22 is provided on the upside of the first layer 21, the hydrocarbon released from the first layer 21 easily passes through the second layer 22, thereby being capable of efficiently purifying the hydrocarbon released from the first layer 21.

With respect to the positional relation of two layers, the expression that "one layer is provided on the upside of the other layer" is used in the present specification. This expression means that part or the whole of the one layer is present on, of two main surfaces of the other layer, the main surface opposite to the main surface on the partition wall 12 side of the substrate 10. The phase "the main surface of the other layer" means an outer surface of the other layer, the outer surface extending in the exhaust gas flow direction X. The one layer may be provided directly on the main surface of the other layer or may be provided on the main surface of the other layer via another layer. The one layer may be provided so that the one layer covers part of the main surface of the other layer or so that the one layer covers the whole of the main surface of the other layer

In the present embodiment, the second layer 22 is provided directly on the main surface of the first layer 21 so that the second layer 22 covers the whole of the main surface of the first layer 21.

The second layer 22 may be provided on the underside of the first layer 21.

With respect to the positional relation of two layers, the expression that "one layer is provided on the underside of the other layer" is used in the present specification. This expression means that part or the whole of the other layer is present on, of two main surfaces of the one layer, the main surface opposite to the main surface on the partition wall 12 side of the substrate 10. The phase "the main surface of the one layer" means an outer surface of the one layer, the outer surface extending in the exhaust gas flow direction X. The other layer may be provided directly on the main surface of the one layer or may be provided on the main surface of the one layer via another layer. The other layer may be provided so that the other layer covers part of the main surface of the one layer or so that the other layer covers the whole of the main surface of the one layer.

### <First layer>

The first layer 21 will be described below.

From the viewpoint of balancing the temperature rise and the purification performance of the first layer 21, the mass (mass after drying and calcining) of the first layer 21 per unit volume of the portion of the substrate 10 provided with the first layer 21 is preferably 40 g/L or more and 200 g/L or less, more preferably 40 g/L or more and 180 g/L or less, and still more preferably 40 g/L or more and 160 g/L or less. The mass of the first layer 21 per unit volume of the portion of the substrate 10 provided with the first layer 21 is calculated from the formula: (Mass of first layer 21) / ((Volume of substrate 10) X (Average length L21 of first layer 21 / Length L10 of substrate 10)).

The above description with respect to the mass of the catalyst layer 20A is also applied to the mass of the first layer 21. Upon application, "the catalyst layer 20A" is replaced with "the first layer 21".

The above description with respect to the method of measuring the average length L20A of the catalyst layer 20A is also applied to the method of measuring the average length L21 of the first layer 21. Upon application, "the catalyst layer 20A" and "the average length L20A" are replaced with "the first layer 21" and "the average length L21", respectively.

The first layer 21 contains a Cu-supporting zeolite.

The Cu-supporting zeolite is, for example, in the form of a particle.

A zeolite is an aluminosilicate crystalline material and is characterized by having pores (for example, micropores) in crystals.

A zeolite in a narrow sense is defined as an aluminosilicate having a three-dimensional network structure in which TO₄ tetrahedra (T = Si, Al) share O atoms at vertexes thereof, and having features of (1) containing water adsorbed on a zeolite, the water being removable without breaking the structure of the zeolite, and (2) containing an exchangeable positive ion.

The zeolite in the present invention encompasses a zeolite-like compound in addition to the the narrow-sense zeolite. Examples of the zeolite-like compound include a compound containing as a T atom an element other than Si and Al, such as P, B, Ga, Ge, Zr, Cu, Fe, Zn, Sn, Co, Mn, Cr, Hf, and the like, and a compound free of positive ions, such as AlPO₄, and the like.

Information on the structures, pore diameters, frameworks and the like of the narrow-sense zeolite and the zeolite-like compound can be obtained from "ATLAS OF ZEOLITE STRUCTURES TYPES" issued by the International Zeolite Association and the database disclosed by the International Zeolite Association.

Zeolite framework structures are compiled as database by the International Zeolite Association, and a specific framework code of three uppercase alphabetic characters is assigned to each of the zeolite framework structures. Examples of the zeolite framework structures include LTA type, FER type, MWW type, MFI type, MOR type, LTL type, FAU type, BEA type, CHA type, MSE type, and the like. The zeolite framework structures can be identified based on, for example, an X-ray diffraction (XRD) pattern.

From the viewpoint of improving the hydrocarbon adsorption performance and the resistance to a thermal load, the framework structure of the zeolite is preferably selected from BEA type, MSE type, and MFI type.

From the viewpoint of improving the crystal stability under a high humidity condition and the ion exchangeability, the SiO₂/Al₂O₃ molar ratio in the zeolite is preferably 1 or more and 900 or less, more preferably 5 or more and 800 or less, and still more preferably 10 or more and 700 or less.

The Cu-supporting zeolite includes the zeolite and Cu.

The zeolite is negatively charged around Al. Thus, a cationic substance such as an alkali metal ion, an alkali earth metal ion, a transition metal ion, an ammonium ion or a proton (hydrogen ion) can be coordinated as a counter cation to counteract this charge. The zeolite containing a sodium ion as the counter cation may be termed as sodium type, the zeolite containing a copper ion as the counter cation may be termed as copper type, and the zeolite containing an iron ion as the counter cation may be termed as iron type. The copper type zeolite can be prepared by, for example, after synthesizing an alkali metal type zeolite, directly exchanging an alkali metal ion with a copper ion or an iron ion, or exchanging an alkali metal ion with an ammonium ion and then exchanging the ammonium ion with a copper ion or an iron ion. In the copper type zeolite, a copper ion can be present on one or both the inside and the outside of a pore of the copper type zeolite.

The copper type zeolite may include a positive ion other than a copper ion. Examples of the positive ion other than a copper ion contained in the copper type zeolite include a proton (hydrogen ion), an alkali metal ion, an alkali earth metal ion, a transition metal ion, an ammonium ion, and the like. Examples of the alkali metal include Li, Na, K, Rb, Cs, and the like. Examples of the alkali earth metal include Ca, Sr, Ba, and the like. Examples of the transition metal include Fe, Mn, Ni, Zn, Ag, Ti, V, Cr, Co, Zr, Nb, Mo, and the like.

When a thermal load is applied to the copper type zeolite, the copper type zeolite may be put in the state where part or all of copper ions are present with the zeolite in the form of CuO. The term "Cu-supporting zeolite" in the present specification encompasses both the state of the copper type zeolite and the above-described state "where part or all of copper ions present with the zeolite in the form of CuO" produced by the application of the thermal load to the copper type zeolite. The Cu-supporting zeolite can be present in one or both states of these.

From the viewpoint of achieving both the hydrocarbon adsorption performance and the resistance to a thermal load, the content of Cu in terms of CuO in the Cu-supporting zeolite is preferably 0.01% by mass or more and 10% by mass or less, more preferably 0.05% by mass or more and 8% by mass or less, and still more preferably 0.1% by mass or more and 6% by mass or less, based on the mass of the Cu-supporting zeolite.

From the viewpoint of effectively exerting the performance (for example, the hydrocarbon adsorption performance and the like) of the Cu-supporting zeolite, the content of the Cu-supporting zeolite in the first layer 21 is preferably 50% by mass or more, more preferably 55% by mass or more, and still more preferably 60% by mass or more, based on the mass of the first layer 21. From the viewpoint of balancing the performance of the Cu-supporting zeolite and the effect of the Zr-based oxide described later, the content of the Cu-supporting zeolite in the first layer 21 is preferably 90% by mass or less, more preferably 85% by mass or less, and still more preferably 80% by mass or less, based on the mass of the first layer 21. Each of these upper limits may be combined with any of the above-described lower limits.

The content of each element in terms of oxide in the Cu-supporting zeolite can be measured by analyzing a sample obtained from the first layer 21 by energy dispersive X-ray spectroscopy (EDX) to obtain an element mapping, and performing EDX elemental analysis on a designated particle in the obtained element mapping. Specifically, the content of each element in terms of oxide in the designated particle can be measured by qualitatively identifying (color-coding) the Cu-supporting zeolite and the other particle(s) (for example, a Zr-based oxide particle and/or the like) by elemental mapping and performing composition analysis (elemental analysis) on the designated particle.

In a case where the composition of raw materials used for forming the first layer 21 is known, the content of the Cu-supporting zeolite in the first layer 21 can be determined from the composition of the raw materials used for forming the first layer 21.

Alternatively, the content of the Cu-supporting zeolite in the first layer 21 can be determined using a conventional method such as scanning electron microscopy-energy dispersive X-ray spectroscopy (SEM-EDX). A specific example is as mentioned below.
(1) Elemental analysis using a conventional method such as SEM-EDX is performed on a sample obtained from the first layer 21 to identify the types of constituent elements of the entire sample, and to obtain the content (% by mass) of each identified element.
(2) Elemental mapping using a conventional method such as SEM-EDX is performed on a sample obtained from the first layer 21, and the types of particles contained in the sample (for example, a Cu-supporting zeolite particle, a Zr-based oxide particle and optionally the other particle(s)) are identified.
(3) For each type of particle, elemental analysis by SEM-EDX is performed on a plurality of randomly selected particles (for example, 50 particles) to identify the types of constituent elements of the particles and to obtain the content (% by mass) of each identified element. For each type of particle, the average value of the content (% by mass) of each element is obtained.
(4) The content (% by mass) of each type of particle in the sample is calculated by drawing up and solving equations representing the relationship among the content (% by mass) of each element in the sample, the content (% by mass) of each element in each type of particle, and the content (% by mass) of each type of particle in the sample, and is defined as the content (% by mass) of each type of particle in the first layer 21.

The first layer 21 contains at least one type of Zr-based oxide as a Zr source.

The first layer 21 may contain a zirconia binder as a Zr source.

The Zr-based oxide is an oxide containing Zr.

The Zr-based oxide and the Cu-supporting zeolite are components constituting the matrix of the first layer 21. The Zr-based oxide is distinct from zirconia used as a binder (hereinafter referred to as the "zirconia binder"). The zirconia binder is derived from zirconia sol used as a material for forming the first layer.

When a thermal load is applied to the Cu-supporting zeolite (particularly, when the Cu-supporting zeolite is exposed to a high temperature (for example, 850°C or more, particularly 950°C or more)), Cu contained in the Cu-supporting zeolite is caused to move, which is considered a cause of the reduction in the hydrocarbon adsorption performance of the Cu-supporting zeolite, thereby leading to the reduction in the exhaust gas purification performance of the exhaust gas purification catalyst. The Zr-based oxide has an effect of preventing Cu contained in the Cu-supporting zeolite from moving, which is considered to prevent the reduction in the hydrocarbon adsorption performance of the Cu-supporting zeolite, thereby leading to the prevention of the reduction in the exhaust gas purification performance of the exhaust gas purification catalyst. In other words, the above-described effect of the Zr-based oxide is considered capable of maintaining the performance (for example, hydrocarbon adsorption performance and the like) of the Cu-supporting zeolite even after a thermal load is applied to the Cu-supporting zeolite (particularly, even after the Cu-supporting zeolite is exposed to a high temperature).

The Zr-based oxide is, for example, in the form of a particle.

From the viewpoint of effectively exerting the above-described effect of the Zr-based oxide, the average particle size of the Zr-based oxide is preferably 1 µm or more and 10 µm or less, more preferably 3 µm or more and 9 µm or less, and still more preferably 3 µm or more and 8 µm or less. The method for measuring the average particle size of the Zr-based oxide is as follows. Using a scanning electron microscopy, the first layer 21 is observed. Then, unidirectional particle sizes (Feret sizes) of 100 Zr-based oxides randomly selected within the visual field are measured. Then, the average value of the measured sizes is defined as the average particle size of the Zr-based oxide. The average particle size of a zirconia binder is typically 1 nm or more and 200 nm or less. Both the Zr-based oxide and the zirconia binder have the effect of preventing Cu contained in the Cu-supporting zeolite from moving. However, the Zr-based oxide is more preferable because it has the particle size more suitable for preventing the Cu from moving.

The Zr-based oxide may or may not contain an element other than Zr and O.

Examples of the Zr-based oxide include zirconia, an oxide obtained by modifying a surface of zirconia with the element other than Zr and O, an oxide obtained by dissolving the element other than Zr and O in zirconia, and the like.

In the Zr-based oxide, the element other than Zr and O may form a solid solution phase with Zr and O, may form a single phase (for example, an oxide phase of the element other than Zr and O) which is a crystalline phase or an amorphous phase, or may form both the solid solution phase and the single phase.

Examples of the element other than Zr and O include a rare earth element, Hf, Cu, Fe, and the like.

Examples of the rare earth element include Ce, Y, Pr, Sc, La, Nd, Sm, Eu, Gd, Tb, Dy, Ho, Er, Tm, Yb, Lu, and the like. From the viewpoint of effectively exerting the above-described effect of the Zr-based oxide, the rare earth element is preferably a rare earth element other than Ce. From the viewpoint of effectively exerting the above-described effect of the Zr-based oxide, the rare earth element other than Ce is preferably selected from La, Nd and Y.

From the viewpoint of improving the exhaust gas purification performance in addition to the viewpoint of effectively exerting the above-described effect of the Zr-based oxide, the content of Zr in terms of ZrO₂ in the Zr-based oxide is preferably 45% by mass or more, more preferably 65% by mass or more, and still more preferably 75% by mass or more, based on the mass of the Zr-based oxide. The upper limit is 100% by mass.

From the viewpoint of effectively exerting the above-described effect of the Zr-based oxide, the content of the element other than Zr an O in terms of oxide in the Zr-based oxide is preferably 55% by mass or less, more preferably 45% by mass or less, still more preferably 35% by mass or less, and still more preferably 25% by mass or less, based on the mass of the Zr-based oxide. The lower limit is zero. The content of the element other than Zr an O in terms of oxide in the Zr-based oxide may be, for example, 0.1% by mass or more, 0.3% by mass or more, or 0.5% by mass or more, based on the mass of the Zr-based oxide. Each of these lower limits may be combined with any of the above-described upper limits. The expression "the content of the element other than Zr an O" means, in a case where the Zr-based oxide contains one type of element other than Zr an O, the content of the one type of element in terms of oxide, and means, in a case where the Zr-based oxide contains two or more types of elements other than Zr an O, the total content of the two or more types of elements in terms of oxide.

From the viewpoint of achieving both the above-described effect of the Zr-based oxide and the resistance to a thermal load, the content of the rare earth element other than Ce in terms of oxide in the Zr-based oxide is preferably 55% by mass or less, more preferably 45% by mass or less, and still more preferably 35% by mass or less, based on the mass of the Zr-based oxide. The lower limit is zero. The content of the rare earth element other than Ce in terms of oxide in the Zr-based oxide may be, for example, 0.1% by mass or more, 0.3% by mass or more, or 0.5% by mass or more, based on the mass of the Zr-based oxide. Each of these lower limits may be combined with any of the above-described upper limits. The expression "the content of the rare earth element other than Ce" means, in a case where the Zr-based oxide contains one type of rare earth element other than Ce, the content of the one type of rare earth element in terms of oxide, and means, in a case where the Zr-based oxide contains two or more types of rare earth elements other than Ce, the total content of the two or more types of rare earth elements in terms of oxide.

From the viewpoint of effectively exerting the above-described effect of the Zr-based oxide, the content of Ce in terms of CeO₂ in the Zr-based oxide is preferably 10% by mass or less, more preferably 5% by mass or less, and still more preferably 1% by mass or less, based on the mass of the Zr-based oxide. The lower limit is zero.

From the viewpoint of effectively exerting the above-described effect of the Zr-based oxide, the content of the Zr-based oxide in the first layer 21 is preferably 10% by mass or more, more preferably 12% by mass or more, and still more preferably 15% by mass or more, based on the mass of the first layer 21. From the viewpoint of balancing the performance of the Cu-supporting zeolite and the above-described effect of the Zr-based oxide, the content of the Zr-based oxide in the first layer 21 is preferably 50% by mass or less, more preferably 45% by mass or less, and sill more preferably 40% by mass or less, based on the mass of the first layer 21. Each of these upper limits may be combined with any of the above-described lower limits. The expression "the content of the Zr-based oxide" means, in a case where the first layer contains one type of Zr-based oxide, the content of the one type of Zr-based oxide, and means, in a case where the first layer contains two or more types of Zr-based oxides, the total content of the two or more types of Zr-based oxides.

From the viewpoint of preventing Cu contained in the Cu-supporting zeolite from moving and sufficiently ensuring the hydrocarbon adsorption performance of the Cu-supporting zeolite, the content of Zr in terms of ZrO₂ in the first layer 21 is preferably 10% by mass or more, more preferably 12% by mass or more, and still more preferably 15% by mass or more, based on the mass of the first layer 21. From the viewpoint of sufficiently ensuring the content of the Cu-supporting zeolite, the content of Zr in terms of ZrO₂ in the first layer 21 is preferably 50% by mass or less, more preferably 45% by mass or less, and still more preferably 40% by mass or less, based on the mass of the first layer 21. Each of these upper limits may be combined with any of the above-described lower limits. The expression "the content of Zr in terms of ZrO₂" means, in a case where the first layer 21 contains one type of Zr source, the content of Zr in terms ZrO₂ derived from the one type of Zr source, and means, in a case where the first layer contains two or more types of Zr sources, the total content of Zr in terms of ZrO₂ derived from the two or more types of Zr sources.

The content of each element in terms of oxide in the Zr-based oxide can be determined in the same manner as the content of each element in terms of oxide in the Cu-supporting zeolite.

The content of the Zr-based oxide in the first layer 21 can be determined in the same manner as the content of the Cu-supporting zeolite in the first layer 21.

In a case where the composition of raw materials used for forming the first layer 21 is known, the content of Zr in terms of ZrO₂ in the first layer 21 can be determined from the composition of the raw materials used for forming the first layer 21.

Alternatively, the content of Zr in terms of ZrO₂ in the first layer 21 can be determined using a conventional method such as scanning electron microscopy-energy dispersive X-ray spectroscopy (SEM-EDX), X-ray fluorescence analysis (XRF), inductively coupled plasma-atomic emission spectroscopy (ICP-AES) or the like. A specific example is as mentioned below.

First, a test piece cut out of the exhaust gas purification catalyst 1A is pulverized and then analyzed by XRF or ICP-AES so that among metal elements large in content, top 20 metal elements can be identified. The identified 20 metal elements include Zr. As long as the test piece contains a portion derived from the first layer 21, the test piece may contain another portion(s) (for example, a portion derived from the substrate 10, a portion derived from the second layer 22 and/or the like). In a case where the test piece contains the other portion(s), the identified 20 metal elements may include a metal element(s) constituting the other portion(s).

Then, the first layer 21 is analyzed by SEM-EDX. In SEM-EDX, the 20 metal elements identified as mentioned above are used as analysis objects, and from each of 10 fields of view in SEM, the mol% value of each metal element is analyzed, assuming that the total mol% value of the 20 metal elements is 100 mol%. The content of Zr in terms of ZrO₂ in the first layer 21 is determined from the average of the mol% values of Zr in the 10 fields of view. When measuring the composition to identify the first layer 21 among a plurality of layers included in the catalyst layer 20A, a layer having the highest content rate of Si can be decided as the first layer 21.

The contents of other elements in terms of oxide in the first layer 21 can be determined in the same manner as the content of Zr in terms of ZrO₂ in the first layer 21.

From the viewpoint of preventing Cu contained in the Cu-supporting zeolite from moving and sufficiently ensuring the hydrocarbon adsorption performance of the Cu-supporting zeolite, the proportion of the content of Zr in terms of ZrO₂ derived from the Zr-based oxide to the total content of Zr in terms of ZrO₂ in the first layer 21 is preferably 75% by mass or more, more preferably 80% by mass or more, and still more preferably 85% by mass or more. The upper limit is 100% by mass. The expression "the content of Zr in terms of ZrO₂ derived from the Zr-based oxide" means, in a case where the first layer contains one type of Zr-based oxide, the content of Zr in terms of ZrO₂ derived from the one type of Zr-based oxide, and means, in a case where the first layer contains two or more types of Zr-based oxides, the total content of Zr in terms of ZrO₂ derived from the two or more types of Zr-based oxides.

CeO₂ is considered having the nature of destroying the crystal structure of a zeolite. This nature is considered a cause of the reduction in the hydrocarbon adsorption performance of the Cu-supported zeolite, thereby leading to the reduction in the exhaust gas purification performance of the exhaust gas purification catalyst. Therefore, from the viewpoint of preventing the crystal structure of the Cu-supported zeolite from breaking and sufficiently ensuring the hydrocarbon adsorption performance of the Cu-supported zeolite, the content of Ce in the first layer 21 in terms of CeO₂ is preferably 3% by mass or less, more preferably 2% by mass or less, and still more preferably 1% by mass or less, based on the mass of the first layer 21. The lower limit is zero. The expression "the content of Ce in terms of CeO₂" means, in a case where the first layer 21 contains one type of Ce source, the content of Ce in terms of CeO₂ derived from the one type of Ce source, and means, in a case where the first layer 21 contains two or more types of Ce sources, the total content of Ce in terms of CeO₂ derived from the two or more types of Ce sources. Examples of the Ce source contained in the first layer 21 include a Zr-based oxide containing Ce, a ceria binder, and the like.

From the viewpoint of balancing the performance of the Cu-supporting zeolite and the above-described effect of the Zr-based oxide, the mass ratio of the content of the Cu-supporting zeolite to the content of the Zr-based oxide in the first layer 21 is preferably 1.5 or more and 3.5 or less, more preferably 1.8 or more and 3.0 or less, and sill more preferably 2.0 or more and 2.8 or less. The meaning of the expression "the content of the Zr-based oxide" is the same as described above.

From the viewpoint of preventing the crystal structure of the Cu-supported zeolite from breaking and sufficiently ensuring the hydrocarbon adsorption performance of the Cu-supported zeolite, the atom ratio of the content of Ce to the content of Cu in the first layer 21 is preferably 0 or more and less than 2, more preferably 0 or more and 1.7 or less, and still more preferably 0 or more and 1.4 or less. The expression "the content of Cu" means, in a case where the first layer 21 contains one type of Cu source, the content of Cu derived from the one type of Cu source, and means, in a case where the first layer 21 contains two or more types of Cu sources, the total content of Cu derived from the two or more types of Cu sources. Examples of the Cu source contained in the first layer 21 include the Cu-supporting zeolite, a Zr-based oxide containing Cu, and the like. The expression "the content of Ce" means, in a case where the first layer 21 contains one type of Ce source, the content of Ce derived from the one type of Ce source, and means, in a case where the first layer 21 contains two or more types of Ce sources, the total content of Ce derived from the two or more types of Ce sources. Examples of the Ce source contained in the first layer 21 include a Zr-based oxide containing Ce, a ceria binder, and the like.

From the viewpoint of preventing Cu contained in the Cu-supporting zeolite from moving and sufficiently ensuring the hydrocarbon adsorption performance of the Cu-supporting zeolite, the proportion of the content of Cu derived from the Cu-supporting zeolite to the total content of Cu in the first layer 21 is preferably 95% by mass or more, more preferably 97% by mass or more, and still more preferably 99% by mass or more. The upper limit is 100% by mass.

The contents of Cu and Ce in the first layer 21 can be each determined in the same manner as the content of Zr in terms of ZrO₂ in the first layer 21.

The first layer 21 may contain a binder. Examples of the binder include inorganic binders such as alumina, zirconia, titania, silica and ceria.

It is preferable that the first layer 21 is substantially free of a platinum group element. The platinum group element is a component contained in the second layer 22, and hence, does not need to be substantially contained in the first layer 21. Allowing the platinum group element to be substantially not contained in the first layer 21 makes it possible to increase the content of the Cu-supporting zeolite and/or the content of the Zr-based oxide in the first layer 21. The expression "substantially free of a platinum group element" means that the content of the platinum group element in terms of metal in the first layer 21 is preferably 0.1% by mass or less, more preferably 0.01% by mass or less, and still more preferably 0.001% by mass or less, based on the mass of the first layer 21. The lower limit is zero. The detail of the platinum group element will be described below.

The content of the platinum group element in terms of metal in the first layer 21 can be determined in the same manner as the content of Zr in terms of ZrO₂ in the first layer 21.

### <Second layer>

The second layer 22 will be described below.

From the viewpoint of balancing the temperature rise and the purification performance of the second layer 22, the mass (mass after drying and calcining) of the second layer 22 per unit volume of the portion of the substrate 10 provided with the second layer 22 is preferably 40 g/L or more and 300 g/L or less, more preferably 40 g/L or more and 280 g/L or less, and still more preferably 40 g/L or more and 250 g/L or less. The mass of the second layer 22 per unit volume of the portion of the substrate 10 provided with the second layer 22 is calculated from the formula: (Mass of second layer 22) / ((Volume of substrate 10) × (Average length L22 of second layer 22 / Length L10 of substrate 10)). The term "length" means the dimension in the axial direction of the substrate 10.

The above description with respect to the mass of the catalyst layer 20A is also applied to the mass of the second layer 22. Upon application, "the catalyst layer 20A" is replaced with "the second layer 22".

The above description with respect to the method of measuring the average length L20A of the catalyst layer 20A is also applied to the method of measuring the average length L22 of the second layer 22. Upon application, "the catalyst layer 20A" and "the average length L20A" are replaced with "the second layer 22" and "the average length L22", respectively.

The second layer 22 contains at least one type of platinum group element.

The platinum group element can be selected from the group of platinum group elements consisting of Pt, Pd, Rh, Ru, Os and Ir. The platinum group element is preferably selected from Pt, Pd and Rh.

The platinum group element is contained in the second layer 22 in the form capable of functioning as a catalytically active component, for example, in the form of a metal composed of the platinum group element, an alloy containing the platinum group element, a compound containing the platinum group element (for example, an oxide of the platinum group element) or the like. The catalytically active component is, for example, in the form of a particle.

From the viewpoint of balancing the exhaust gas purification performance and the cost, the content of the platinum group element in the second layer 22, expressed as the mass of the platinum group element in terms of metal per unit volume of the substrate 10, is preferably 0.1 g/L or more and 12 g/L or less, more preferably 0.1 g/L or more and 10 g/L or less, and still more preferably 0.1 g/L or more and 8 g/L or less. The expression "the content of the platinum group element" means, in a case where the second layer 22 contains one type of platinum group element, the content of the one type of platinum group element, and means, in a case where the second layer 22 contains two or more types of platinum group elements, the total content of the two or more types of platinum group elements.

In one embodiment, the second layer 22 contains Rh. In a case where the second layer 22 contains Rh, it is preferable that, in the second layer 22, the total content of a platinum group element(s) other than Rh on a molar basis does not exceed the content of Rh on a molar basis, from the viewpoint of preventing deactivation of Rh by alloying Rh with the platinum group element(s) other than Rh.

In another embodiment, the second layer 22 contains Pd. In a case where the second layer 22 contains Pd, it is preferable that, in the second layer 22, the total content of a platinum group element(s) other than Pd on a molar basis is less than the content of Pd on a molar basis, from the viewpoint of preventing deactivation of Pd by alloying Pd with the platinum group element(s) other than Pd. In the second layer 22, the ratio of the total molar amount of the platinum group element(s) other than Pd to the molar amount of Pd is preferably 0.1 or less, more preferably 0.01 or less, and still more preferably 0.001 or less.

The content of the platinum group element in terms of metal in the second layer 22 can be determined in the same manner as the content of Zr in terms of ZrO₂ in the first layer 21.

From the viewpoint of improving the exhaust gas purification performance, it is preferable that the second layer 22 contains a carrier and that the platinum group element is supported on the carrier.

The expression that "the platinum group element is supported on the carrier" means the state where a catalytically active component containing the platinum group element is physically or chemically adsorbed or retained in an external surface of the carrier or an internal surface of a pore of the carrier. Whether a catalytically active component containing the platinum group element is supported on the carrier can be confirmed using, for example, scanning electron microscopy-energy dispersive X-ray spectroscopy (SEM-EDX) or the like. For example, in a case where the platinum group element and the carrier exist in the same region in an element mapping obtained by SEM-EDX or the like, a catalytically active component containing the platinum group element can be judged as supported on the carrier.

The carrier is, for example, in the form of a particle.

Examples of the carrier include an inorganic oxide, and the like.

From the viewpoint of balancing the exhaust gas purification performance and the cost, the content of the inorganic oxide in the second layer 22 is preferably 80% by mass or more, more preferably 85% by mass or more, and still more preferably 90% by mass or more, based on the mass of the second layer 22. The upper limit is a value given by subtracting the content of the platinum group element in terms of metal from 100% by mass. The expression "the content of the inorganic oxide" means, in a case where the second layer 22 contains one type of inorganic oxide, the content of the one type of inorganic oxide, and means, in a case where the second layer 22 contains two or more types of inorganic oxides, the total content of the two or more types of inorganic oxides.

The content of the inorganic oxide in the second layer 22 can be determined in the same manner as the content of the Cu-supporting zeolite in the first layer 21.

The inorganic oxide may be an inorganic oxide having oxygen storage capacity (OSC) (hereinafter referred to as the "oxygen storage component" in some cases) or may be an inorganic oxide other than the oxygen storage component.

Examples of the oxygen storage component include CeO₂, a complex oxide containing Ce and Zr (hereinafter referred to as the "CeO₂-ZrO₂-based complex oxide" in some cases), and the like.

The CeO₂-ZrO₂-based complex oxide means a complex oxide wherein the content of Ce in terms of oxide in the complex oxide is 5% by mass or more and 95% by mass or less, based on the mass of the complex oxide, and wherein the amount of Zr in terms of oxide in the complex oxide is 5% by mass or more and 95% by mass or less, based on the mass of the complex oxide.

The content of each element in terms of oxide in the CeO₂-ZrO₂-based complex oxide can be determined in the same manner as the content of each element in terms of oxide in the Cu-supporting zeolite.

In the CeO₂-ZrO₂-based complex oxide, CeO₂ and ZrO₂ preferably form a solid solution phase. CeO₂ and ZrO₂ may each form a single phase (CeO₂ phase, ZrO₂ phase) in addition to the solid solution phase.

The CeO₂-ZrO₂-based complex oxide may contain an element other than Ce and Zr. The element other than Ce and Zr or an oxide thereof may form a solid solution phase with CeO₂ and/or ZrO₂, or may form a single phase. Examples of the element other than Ce and Zr include a rare earth element other than Ce, an alkaline earth metal element, a transition metal element, and the like.

Examples of the inorganic oxide other than the oxygen storage component include alumina, silica, silica-alumina, alumino-silicates, alumina-zirconia, alumina-chromia, alumina-ceria, alumina-lanthana, titania, and the like.

The second layer 22 may contain a binder. Examples of the binder include inorganic binders such as alumina, zirconia, titania, silica and ceria.

A method for forming the catalyst layer 20A will be described below.

The substrate 10, a slurry for forming the first layer 21, and a slurry for forming the second layer 22 are prepared.

The compositions of the slurries for forming the first layer 21 and the second layer 22 are adjusted depending on the compositions of the first layer 21 and the second layer 22, respectively. The slurry for forming the first layer 21 contains, for example, a Cu-supporting zeolite, a Zr-based oxide, a binder, a solvent, and the like. The slurry for forming the second layer 22 contains, for example, a platinum group element supply source, a carrier, a binder, a solvent, and the like. Examples of the platinum group element supply source include a salt of a platinum group element. Examples of the salt of the platinum group element include a nitrate, an ammine complex salt, an acetate, a chloride, and the like. Examples of the binder include alumina sol, zirconia sol, titania sol, silica sol, ceria sol, and the like. Examples of the solvent include water, an organic solvent, and the like.

The slurry for forming the first layer 21 is applied to the substrate 10, dried, and calcined. Then, the slurry for forming the second layer 22 is applied to the substrate 10, dried, and calcined. In this manner, the catalyst layer 20A can be formed. The slurry can be applied, for example, by dipping the whole of the substrate 10 in the slurry or by dipping the end on the exhaust gas inflow side or exhaust gas outflow side of the substrate 10 in the slurry and sucking the slurry from the opposite side. The drying temperature is, for example, 60°C or more and 120°C or less, the drying time is, for example, 0.5 hours or more and 120 hours or less, the calcining temperature is, for example, 400°C or more and 700°C or less, and the calcining time is, for example, 0.5 hours or more and 3 hours or less. Calcining may be performed, for example, in an air atmosphere.

### <<Second embodiment>>

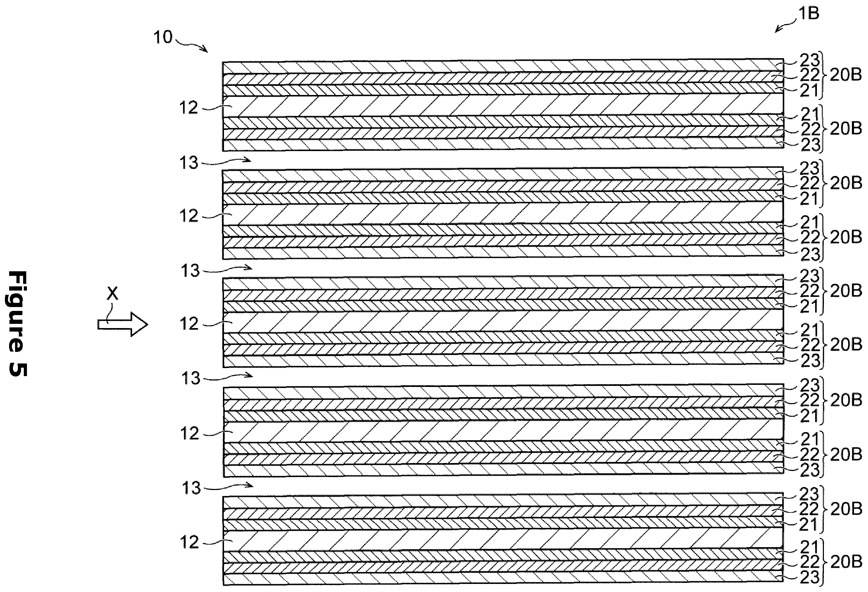

With reference to Figure 5, an exhaust gas purification catalyst 1B according to a second embodiment of the present invention will be described below. In the exhaust gas purification catalyst 1B, the same members and portions as those of the exhaust gas purification catalyst 1A are denoted by the same reference signs as those of the exhaust gas purification catalyst 1A. Unless otherwise specified, the above description with respect to the exhaust gas purification catalyst 1A is also applied to the exhaust gas purification catalyst 1B.

As shown in Figure 5, the exhaust gas purification catalyst 1B differs from the exhaust gas purification catalyst 1A in that the exhaust gas purification catalyst 1B includes a catalyst layer 20B instead of the catalyst layer 20A.

As shown in Figure 5, the catalyst layer 20B differs from the catalyst layer 20A in that the catalyst layer 20B includes a third layer 23. Unless otherwise specified, the above description with respect to the catalyst layer 20A is also applied to the catalyst layer 20B.

As shown in Figure 5, the second layer 22 is provided on the upside of the first layer 21, and the third layer 23 is provided on the upside of the second layer 22. In other words, the first layer 21, the second layer 22 and the third layer 23 are provided sequentially from the partition wall 12 side of the substrate 10. In the present embodiment, the second layer 22 is provided directly on the main surface of the first layer 21 so that the second layer 22 covers the whole of the main surface of the first layer 21, and the third layer 23 is provided directly on the main surface of the second layer 22 so that the third layer 23 covers the whole of the main surface of the second layer 22.

In a case where the second layer 22 is provided on the upside of the first layer 21, the third layer 23 may be provided between the first layer 21 and the second layer 22 (i.e., on the upside of the first layer 21 and on the underside of the second layer 22), or may be provided on the underside of the first layer 21 (i.e., on the surface of the partition wall 12 of the substrate 10). **In** other words, the first layer 21, the third layer 23 and the second layer 22 may be provided or the third layer 23, the first layer 21 and the second layer 22 may be provided, sequentially from the partition wall 12 side of the substrate 10.

In a case where the second layer 22 is provided on the underside of the first layer 21, the third layer 23 may be provided between the first layer 21 and the second layer 22 (i.e., on the upside of the second layer 22 and on the underside of the first layer 21), or may be provided on the underside of the second layer 22 (i.e., on the surface of the partition wall 12 of the substrate 10), or may be provided on the upside of the first layer 21. In other words, the second layer 22, the third layer 23 and the first layer 21 may be provided, or the third layer 23, the second layer 22 and the first layer 21 may be provided, or the second layer 22, the first layer 21 and the third layer 23 may be provided, sequentially from the partition wall 12 side of the substrate 10.

From the viewpoint of balancing the exhaust gas purification performance and the cost, the mass (mass after drying and calcining) of the third layer 23 per unit volume of the portion of the substrate 10 provided with the third layer 23 is preferably 40 g/L or more and 300 g/L or less, more preferably 40 g/L or more and 280 g/L or less, and still more preferably 40 g/L or more and 250 g/L or less. The mass of the third layer 23 per unit volume of the portion of the substrate 10 provided with the third layer 23 is calculated from the formula: (Mass of third layer 23) / ((Volume of substrate 10) × (Average length L23 of third layer 23 / Length L10 of substrate 10)).

The above description with respect to the mass of the catalyst layer 20A is also applied to the mass of the third layer 23. Upon application, "the catalyst layer 20A" is replaced with "the third layer 23".

The above description with respect to the method of measuring the average length L20A of the catalyst layer 20A is also applied to the method of measuring the average length L23 of the third layer 23. Upon application, "the catalyst layer 20A" and "the average length L20A" are replaced with "the third layer 23" and "the average length L23", respectively.

The third layer 23 contains at least one type of platinum group element.

The platinum group element can be selected from the group of platinum group elements consisting of Pt, Pd, Rh, Ru, Os and Ir. The platinum group element is preferably selected from Pt, Pd and Rh.

The platinum group element is contained in the third layer 23 in the form capable of functioning as a catalytically active component, for example, in the form of a metal composed of the platinum group element, an alloy containing the platinum group element, a compound containing the platinum group element (for example, an oxide of the platinum group element) or the like. The catalytically active component is, for example, in the form of a particle.

From the viewpoint of balancing the exhaust gas purification performance and the cost, the content of the platinum group element in the third layer 23, expressed as the mass of the platinum group element in terms of metal per unit volume of the substrate 10, is preferably 0.1 g/L or more and 12 g/L or less, more preferably 0.1 g/L or more and 10 g/L or less, and still more preferably 0.1 g/L or more and 8 g/L or less. The expression "the content of the platinum group element" means, in a case where the third layer 23 contains one type of platinum group element, the content of the one type of platinum group element, and means, in a case where the third layer 23 contains two or more types of platinum group elements, the total content of the two or more types of platinum group elements.

In a case where the second layer 22 contains Rh, it is preferable that the third layer 23 contains Pd, from the viewpoint of improving the exhaust gas purification performance. In a case where the third layer 23 contains Pd, it is preferable that, in the third layer 23, the total content of a platinum group element(s) other than Pd on a molar basis does not exceed the content of Pd on a molar basis, from the viewpoint of preventing deactivation of Pd by alloying Pd with the platinum group element(s) other than Pd.

In a case where the second layer 22 contains Pd, it is preferable that the third layer 23 contains Rh, from the viewpoint of improving the exhaust gas purification performance. In a case where the third layer 23 contains Rh, it is preferable that, in the third layer 23, the total content of a platinum group element(s) other than Rh on a molar basis is less than the content of Rh on a molar basis, from the viewpoint of preventing deactivation of Rh by alloying Rh with the platinum group element(s) other than Rh. In the third layer 23, the ratio of the total molar amount of the platinum group element(s) other than Rh to the molar amount of Rh is preferably 0.1 or less, more preferably 0.01 or less, and still more preferably 0.001 or less.

The content of the platinum group element in terms of metal in the third layer 23 can be determined in the same manner as the content of Zr in terms of ZrO₂ in the first layer 21.

From the viewpoint of improving the exhaust gas purification performance, it is preferable that the third layer 23 contains a carrier and that the platinum group element is supported on the carrier.

The meaning of the expression that "the platinum group element is supported on the carrier" and the confirmation method thereof are the same as described above.

The description with respect to the carrier (including the description with respect to the inorganic oxide) are the same as described above.

From the viewpoint of balancing the exhaust gas purification performance and the cost, the content of the inorganic oxide in the third layer 23 is preferably 80% by mass or more, more preferably 85% by mass or more, and still more preferably 90% by mass or more, based on the mass of the third layer 23. The upper limit is a value given by subtracting the content of the platinum group element in terms of metal from 100% by mass. The expression "the content of the inorganic oxide" means, in a case where the third layer 23 contains one type of inorganic oxide, the content of the one type of inorganic oxide, and means, in a case where the third layer 23 contains two or more types of inorganic oxides, the total content of the two or more types of inorganic oxides.

The content of the inorganic oxide in the third layer 23 can be determined in the same manner as the content of the Cu-supporting zeolite in the first layer 21.

A method for forming the catalyst layer 20B will be described below. Unless otherwise specified, the above description with respect to the method for forming the catalyst layer 20A is also applied to the method for forming the catalyst layer 20B.

The substrate 10, a slurry for forming the first layer 21, a slurry for forming the second layer 22, and a slurry for forming the third layer 23 are prepared.

The compositions of the slurries for forming the first layer 21, the second layer 22 and the third layer 23 are adjusted depending on the compositions of the first layer 21, the second layer 22 and the third layer 23, respectively. The slurry for forming the third layer 23 contains, for example, a platinum group element supply source, a carrier, a binder, a solvent, and the like.

The slurry for forming the first layer 21 is applied to the substrate 10, dried, and calcined. Then, the slurry for forming the second layer 22 is applied to the substrate 10, dried, and calcined. Then, the slurry for forming the third layer 23 is applied to the substrate 10, dried, and calcined. In this manner, the catalyst layer 20B can be formed.

### <<Third embodiment>

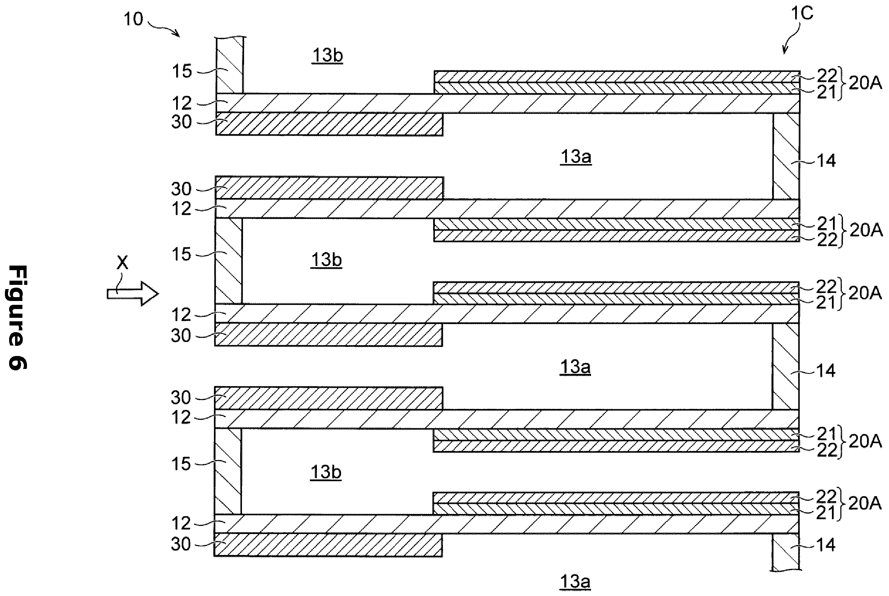

With reference to Figure 6, An exhaust gas purification catalyst 1C according to a third embodiment of the present invention will be described below. In the exhaust gas purification catalyst 1C, the same members and portions as those of the exhaust gas purification catalyst 1A are denoted by the same reference signs as those of the exhaust gas purification catalyst 1A. Unless otherwise specified, the above description with respect to the exhaust gas purification catalyst 1A is also applied to the exhaust gas purification catalyst 1C.

As shown in Figure 6, the exhaust gas purification catalyst 1C differs from the exhaust gas purification catalyst 1A in that:
the substrate 10 is provided with a first sealing member 14 that seals the ends of some of the cells 13 on the exhaust gas outflow side and a second sealing member 15 that seals the ends of the remaining cells 13 on the exhaust gas inflow side, so that some of the cells 13 are each an inflow-side cell 13a in which the end on the exhaust gas inflow side is open and the end on the exhaust gas outflow side is closed by the first sealing member 14, and the remaining cells 13 are each an outflow-side cell 13b in which the end on the exhaust gas inflow side is closed by the second sealing member 15 and the end on the exhaust gas outflow side is open; and
a catalyst layer 30 is provided on the inflow-side cell 13a side of the partition wall 12 of the substrate 10, and the catalyst layer 20A is provided on the outflow-side cell 13b side of the partition wall 12 of the substrate 10. The above description with respect to the catalyst layer 20A is also applied to the third embodiment.

As shown in Figure 6, a plurality of (for example, four) outflow-side cells 13b are arranged around and adjacent to one inflow-side cell 13a, and the inflow-side cell 13a and the outflow-side cells 13b adjacent to the inflow-side cell 13a are separated from one another by the porous partition wall 12.

As shown in Figure 6, the catalyst layer 30 extends from the end on the exhaust gas inflow side of the partition wall 12 along the exhaust gas flow direction X so as not to reach the end on the exhaust gas outflow side of the partition wall 12. The catalyst layer 20A extends from the end on the exhaust gas outflow side of the partition wall 12 along the direction opposite to the exhaust gas flow direction X so as not to reach the end of the exhaust gas inflow side of the partition wall 12. In other word, the catalyst layer 30 is provided on the upstream side of the catalyst layer 20A. The expression "the catalyst layer 30 is provided on the upstream side of the catalyst layer 20A" means that part or the whole of the catalyst layer 30 is present on, of the surface of the substrate 10, a region located on the upstream side of a region in which the catalyst layer 20A is provided, in the exhaust gas flow direction X. The catalyst layer 30 may reach the end on the exhaust gas outflow side of the partition wall 12. The catalyst layer 20A may reach the end of the exhaust gas inflow side of the partition wall 12.

In the exhaust gas purification catalyst 1C, the exhaust gas that has flowed in from the end (opening) on the exhaust gas inflow side of the inflow-side cell 13a passes through the porous partition wall 12 and flows out from the end (opening) on the exhaust gas outflow side of the outflow-side cell 13b. Such a mode is called a wall-flow type.

In the exhaust gas purification catalyst 1C, when the exhaust gas that has flowed in from the end (opening) on the exhaust gas inflow side of the inflow-side cell 13a passes through the porous partition wall 12, particulate matter (PM) in the exhaust gas is collected in the pores of the partition wall 12. Therefore, the exhaust gas purification catalyst 1C is useful as a particulate filter for gasoline engines or as a diesel particulate filter for diesel engines.

As shown in Figure 6, the catalyst layer 30 has a single-layer structure, but may have a laminated structure. The catalyst layer 30 can be configured similarly to known catalyst layers.

In the exhaust gas purification catalyst 1C, the catalyst layer 20A may be provided on the inflow-side cell 13a side of the partition wall 12 of the substrate 10, and the catalyst layer 30 may be provided on the outflow-side cell 13b side of the partition wall 12 of the substrate 10.

In the exhaust gas purification catalyst 1C, the catalyst layer 20A may be provided on the inflow-side cell 13a side of the partition wall 12 of the substrate 10. In other word, the catalyst layer 20 may be provided on both the inflow-side cell 13a side and the outflow-side cell 13b side of the partition wall 12 of the substrate 10.

### <<Fourth embodiment>

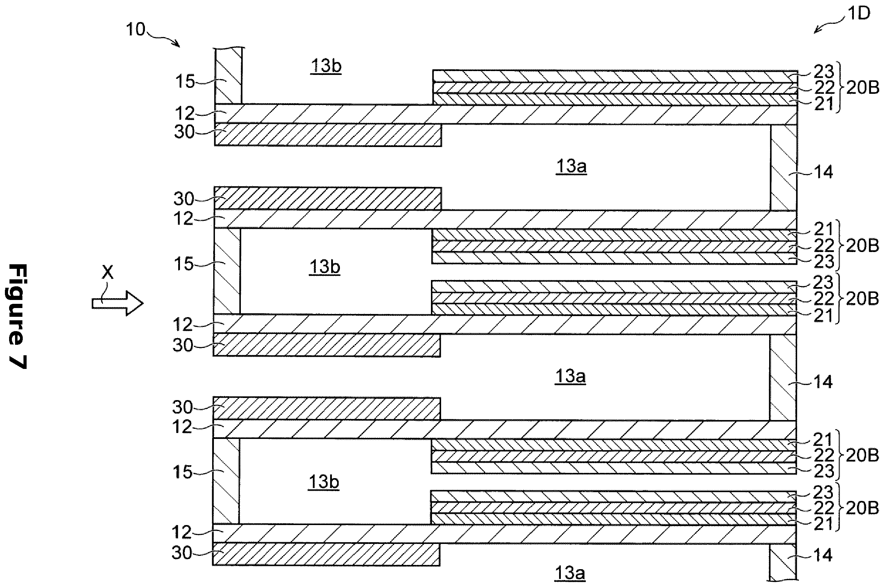

With reference to Figure 7, an exhaust gas purification catalyst 1D according to a fourth embodiment of the present invention will be described below. In the exhaust gas purification catalyst 1D, the same members and portions as those of the exhaust gas purification catalyst 1C are denoted by the same reference signs as those of the exhaust gas purification catalyst 1C. Unless otherwise specified, the above description with respect to the exhaust gas purification catalyst 1C is also applied to the exhaust gas purification catalyst 1D.

As shown in Figure 7, the exhaust gas purification catalyst 1D differs from the exhaust gas purification catalyst 1C in that the exhaust gas purification catalyst 1D includes a catalyst layer 20B instead of the catalyst layer 20A. The above description with respect to the catalyst layer 20B is also applied to the fourth embodiment.

### EXAMPLES

### [Example 1]

### <Formation of First layer>

A copper type BEA type zeolite (the SiO₂/Al₂O₃ molar ratio: 37/1, and the content of Cu in terms of CuO: 1.9% by mass) was produced in accordance with a known method. 144 g of the copper type BEA type zeolite, 60 g of a Zr-based oxide (the content of Zr in terms of ZrO₂: 71% by mass, and the content of rare earth elements other than Ce (La, Nd) in terms of oxide: 29% by mass), 5 g of a ZrO₂ sol in terms of solid content, and 21 g of a SiO₂ sol in terms of solid content were mixed in 320 g of pure water to obtain a slurry for forming a first layer. The slurry for forming the first layer was coated on a honeycomb porous substrate made of cordierite. The substrate after coating was calcined at 500°C for 1 hour in an air atmosphere (1 atm) to form the first layer on the substrate. The mass of the first layer per unit volume of the portion of the substrate provided with the first layer was 120 g/L. The components and composition of the first layer are shown in Tables 1 and 2.

### <Formation of Second layer>

A rhodium nitrate aqueous solution containing 3.5 g of rhodium element in terms of metal, 207 g of a CeO₂-ZrO₂-based complex oxide, 65 g of alumina, 3 g of an alumina sol in terms of solid content, and 7 g of a zirconia sol in terms of solid content were mixed in 416 g of pure water to obtain a slurry for forming a second layer. The slurry for forming the second layer was coated on the first layer. The substrate after coating was calcined at 500°C for 1 hour in an air atmosphere (1 atm) to form the second layer on the first layer. The mass of the second layer per unit volume of the portion of the substrate provided with the second layer was 60 g/L, and the rhodium element in the second layer per unit volume of the substrate was 0.7 g/L in terms of metal.

### <Formation of Third layer>

A palladium nitrate aqueous solution containing 5.9 g of palladium element in terms of metal, 36 g of a CeO₂-ZrO₂-based complex oxide, 73 g of alumina, and 6.2 g of an alumina sol in terms of solid content were mixed in 214 g of pure water to obtain a slurry for forming a third layer. The slurry for forming the third layer was coated on the second layer. The substrate after coating was calcined at 500°C for 1 hour in an air atmosphere (1 atm) to form the third layer on the second layer. The mass of the third layer per unit volume of the portion of the substrate provided with the third layer was 90 g/L, and the palladium element in the third layer per unit volume of the substrate was 4.4 g/L in terms of metal.

Through the above steps, the exhaust gas purification catalyst provided with the substrate, the first layer provided on the substrate, the second layer provided on the first layer, and the third layer provided on the second layer was produced.

### [Example 2]

An exhaust gas purification catalyst was produced in the same manner as in Example 1, except that a Zr-based oxide (the content of Zr in terms of ZrO₂: 83% by mass, and the content of rare earth elements other than Ce (La, Nd) in terms of oxide: 17% by mass) was used in place of the Zr-based oxide used in the formation of the first layer. The components and composition of the first layer are shown in Tables 1 and 2.

### [Example 3]

An exhaust gas purification catalyst was produced in the same manner as in Example 1, except that a Zr-based oxide (the content of Zr in terms of ZrO₂: 100% by mass) was used in place of the Zr-based oxide used in the formation of the first layer. The components and composition of the first layer are shown in Tables 1 and 2.

### [Example 4]

An exhaust gas purification catalyst was produced in the same manner as in Example 1, except that a Zr-based oxide (the content of Zr in terms of ZrO₂: 60% by mass, and the content of rare earth elements other than Ce (La, Nd) in terms of oxide: 40% by mass) was used in place of the Zr-based oxide used in the formation of the first layer. The components and composition of the first layer are shown in Tables 1 and 2.

### [Example 5]

An exhaust gas purification catalyst was produced in the same manner as in Example 1, except that a Zr-based oxide (the content of Zr in terms of ZrO₂: 46% by mass, and the content of rare earth elements other than Ce (La, Nd) in terms of oxide: 54% by mass) was used in place of the Zr-based oxide used in the formation of the first layer. The components and composition of the first layer are shown in Tables 1 and 2.

### [Example 6]

An exhaust gas purification catalyst was produced in the same manner as in Example 1, except that a Cu type MSE type zeolite (the SiO₂/Al₂O₃ molar ratio: 180/1, and the content of Cu in terms of CuO: 1.5% by mass) was used in place of the Cu type BEA type zeolite in the formation of the first layer. The components and composition of the first layer are shown in Tables 1 and 2.

### [Comparative Example 1]

An exhaust gas purification catalyst was produced in the same manner as in Example 1, except that a Zr-based oxide (the content of Zr in terms of ZrO₂: 70% by mass, the content of Ce in terms of CeO₂: 15% by mass, and the content of earth elements other than Ce (La, Nd, Y) in terms of oxide: 15% by mass) was used in place of the Zr-based oxide used in the formation of the first layer. The components and composition of the first layer are shown in Tables 1 and 2.

### [Comparative Example 2]

An exhaust gas purification catalyst was produced in the same manner as in Example 1, except that an Al-based oxide (the content of Al in terms of Al₂O₃: 99% by mass, and the content of La in terms of La₂O₃: 1% by mass) was used in place of the Zr-based oxide used in the formation of the first layer. The components and composition of the first layer are shown in Tables 1 and 2.

### [Test Example 1]

The exhaust gas purification catalysts obtained in Examples and Comparative Examples were evaluated as follows.

### [High-humidity accelerated degradation conditions]

The exhaust gas purification catalyst cored to 30 mL was heat-treated to the following FC mode at 980°C for 25 hours in an air of 10 vol% H₂O.

FC Mode: The model gas having the following composition (3 L/min) and the air (3 L/min) were alternately flowed.

Model gas flow rate: C₃H₆ 6 mL/min, O₂ 71 mL/min, N₂ 2923 mL/min (total 3L/min).

10 vol% H₂O was vaporized from a water-filled tank and mixed in the model gas or the air in the form of water vapor. The saturated water vapor pressure was adjusted by temperature to obtain the water vapor content of the above percent by volume.

### [Purification rate of adsorbed hydrocarbon]

The model gas evaluation was performed using the heat-treated exhaust gas purification catalyst, and thereby both the hydrocarbon relative adsorption amount and the hydrocarbon relative purification amount were evaluated as follows.

### <Model gas evaluation>

An evaluation apparatus was charged with the heat-treated exhaust gas purification catalyst cored to 30 mL, and a temperature was increased to 500°C at a temperature rise rate of 20°C/min while an exhaust model gas (NO: 500 vol ppm, CO: 0.5 vol%, H₂: 0.17 vol%, C₅H₁₂: 21 vol ppm, C₃H₆: 30 vol ppm, C₇H₈: 105 vol ppm, O₂: 0.45 vol%, CO₂: 14 vol%, H₂O: 10 vol%) was allowed to flow at a space velocity of 50000/h, whereby the amount of hydrocarbon discharged was continuously measured to determine both the hydrocarbon adsorption amount and the hydrocarbon purification amount by the following formulas. Hydrocarbon adsorption amount (g) = [Total hydrocarbon amount (g) fed until hydrocarbon amount at outlet side is more than model gas feed amount] - [Total hydrocarbon amount (g) discharged until hydrocarbon amount at outlet side is more than model gas feed amount] Hydrocarbon purification amount (g) = [Total hydrocarbon amount (g) discharged since hydrocarbon amount at outlet side is more than model gas feed amount until lower than model gas feed amount] - [Total hydrocarbon amount (g) fed since hydrocarbon amount at outlet side is more than model gas feed amount until lower than model gas feed amount]

Based on the hydrocarbon adsorption amount and the hydrocarbon purification amount of Comparative Example 1, the hydrocarbon relative adsorption amounts of Examples 1 to 6 and the hydrocarbon relative purification amounts of Examples 1 to 3 were determined by the following formulas. The results are shown in Table 3. Hydrocarbon relative adsorption amount = [Hydrocarbon adsorption amount (g) of each Example] / [Hydrocarbon adsorption amount (g) of Comparative Example 1] × 100 Hydrocarbon relative purification amount = [Hydrocarbon purification amount (g) of each Example] / [Hydrocarbon purification amount (g) of Comparative Example 1] × 100

### [Table 1]

**Table 1**

| | Components of First layer | | | | | |
|---|---|---|---|---|---|---|
| | Cu type zeolite | Zr-based oxide | | | | |
| | Type of zeolite | Presence or absence of Zr-based oxide | Content of Zr in terms of ZrO₂ (% by mass) | Content of Ce in terms of CeO₂ (% by mass) | Content of rare earth elements other than Ce in terms of oxide (% by mass) | Average particle size (µm) |
| Example 1 | BEA | Presence | 71 | 0 | 29 | 8 |
| Example 2 | BEA | Presence | 83 | 0 | 17 | 5 |
| Example 3 | BEA | Presence | 100 | 0 | 0 | 3 |
| Example 4 | BEA | Presence | 60 | 0 | 40 | 7 |
| Example 5 | BEA | Presence | 46 | 0 | 54 | 7 |
| Example 6 | MSE | Presence | 83 | 0 | 17 | 5 |
| Comparative Example 1 | BEA | Presence | 70 | 15 | 15 | 4 |
| Comparative Example 2 | BEA | Absence | - | - | - | - |

**Table 2**

| | Composition of First layer | | | | | |
|---|---|---|---|---|---|---|
| | Content of Cu type zeolite (% by mass) | Content of Zr-based oxide (% by mass) | Content of Zr in terms of ZrO₂ (% by mass) | Content of Ce in terms of CeO₂ (% by mass) | Ce/Cu (atom ratio) | Cu type zeolite / Zr-based oxide (mass ratio) |
| Example 1 | 63 | 26 | 21 | 0 | 0 | 2.4 |
| Example 2 | 63 | 26 | 24 | 0 | 0 | 2.4 |
| Example 3 | 63 | 26 | 28 | 0 | 0 | 2.4 |
| Example 4 | 63 | 26 | 18 | 0 | 0 | 2.4 |
| Example 5 | 63 | 26 | 14 | 0 | 0 | 2.4 |
| Example 6 | 63 | 26 | 24 | 0 | 0 | 2.4 |
| Comparative Example 1 | 63 | 26 | 20 | 4 | 1.51 | 2.4 |
| Comparative Example 2 | 63 | - | - | - | - | - |

### [Table 3]

**Table 3**

| | Hydrocarbon relative adsorption amount | Hydrocarbon relative purification amount |
|---|---|---|
| Example 1 | 118 | 115 |
| Example 2 | 137 | 126 |
| Example 3 | 124 | 121 |
| Example 4 | 106 | - |
| Example 5 | 104 | - |
| Example 6 | 130 | - |
| Comparative Example 1 | 100 | 100 |
| Comparative Example 2 | 100 | 84 |

As shown in Table 2, in Comparative Example 1, the content of Zr in the first layer in terms of ZrO₂ is 10% by mass or more based on the mass of the first layer, and the content of Ce in the first layer in terms of CeO₂ is more than 3% by mass based on the mass of the first layer. In Comparative Example 2, the content of Zr in the first layer in terms of ZrO₂ is less than 10% by mass based on the mass of the first layer. On the contrary, in Examples 1 to 6, the content of Zr in the first layer in terms of ZrO₂ is 10% by mass or more based on the mass of the first layer, and the content of Ce in the first layer in terms of CeO₂ is 3% by mass or less based on the mass of the first layer. As shown in Table 3, these differences resulted in the hydrocarbon adsorption amounts of Examples 1 to 6 significantly higher than those of Comparative Examples 1 and 2 and the hydrocarbon purification amounts of Examples 1 to 3 significantly higher than those of Comparative Examples 1 and 2.

### Description of REFERENCE SIGNS

- 1A, 1B, 1C, 1D: Exhaust Gas Purification Catalyst
- 10: Substrate
- 20A, 20B: Catalyst Layer
- 21: First Layer
- 22: Second Layer
- 23: Third Layer

## Claims

1. An exhaust gas purification catalyst, comprising a substrate and a catalyst layer provided on the substrate,
wherein the catalyst layer comprises: a first layer comprising a Cu-supporting zeolite and a Zr-based oxide; and a second layer comprising a platinum group element,
wherein a content of Zr in terms of ZrO₂ in the first layer is 10% by mass or more, based on a mass of the first layer, and
wherein a content of Ce in terms of CeO₂ in the first layer is 3% by mass or less, based on the mass of the first layer.

2. The exhaust gas purification catalyst as claimed in claim 1, wherein the content of Zr in terms of ZrO₂ in the first layer is 50% by mass or less, based on the mass of the first layer.

3. The exhaust gas purification catalyst as claimed in claim 1 or 2, wherein a content of Zr in terms of ZrO₂ in the Zr-based oxide is 45% by mass or more, based on a mass of the Zr-based oxide.

4. The exhaust gas purification catalyst as claimed in claim 1 or 2, wherein a content of Ce in terms of CeO₂ in the Zr-based oxide is 10% by mass or less, based on a mass of the Zr-based oxide.

5. The exhaust gas purification catalyst as claimed in claim 1 or 2, wherein the Zr-based oxide has an average particle size of 1 µm or more and 10 µm or less.

6. The exhaust gas purification catalyst as claimed in claim 1 or 2, wherein an atom ratio of a content of Ce to a content of Cu in the first layer is 0 or more and less than 2.

7. The exhaust gas purification catalyst as claimed in claim 1 or 2, wherein a mass ratio of a content of the Cu-supporting zeolite to a content of the Zr-based oxide in the first layer is 1.5 or more and 3.5 or less.

8. The exhaust gas purification catalyst as claimed in claim 1 or 2, wherein a content of the Cu-supporting zeolite in the first layer is 50% by mass or more and 90% by mass or less, based on the mass of the first layer.
